# EUROPEAN PATENT APPLICATION

(11) **EP 2 258 646 A1**
(43) Date of publication of application: **08.12.2010**
(21) Application number: 10164956.4
(22) Date of filing: 04.06.2010
(51) Int. Cl.: B65H 35/00, B65H 37/00, B29C 70/38

(54) **Device and method for the application of a tape, having at least one heat-activable surface, to an extruded gasket**

(30) Priority: 04.06.2009 IT TO20090425
(71) Applicant: Tecnofive s.r.l., 10019 Strambino (IT)
(72) Inventor: Rossi, Marco, 10019, STRAMBINO (IT)
(74) Representative: Gervasi, Gemma

(57) **Abstract**

A device and method for the application of a tape having a heat-activable surface to a support in the form of gasket preferably made of rubber or thermoplastic material, such as PVC. In particular, the device according to the invention comprises a first guide pulley (4) of the belt (2) opposed with a second guide pulley (5) of the support (3) and a laser source (1) adapted to project a laser beam (11) to activate the heat-activable surface of the tape and to heat the surface of the gasket to which the tape is applied.

## Description

### FIELD OF THE INVENTION

The present invention relates to a device and to a method for the application of a tape, having at least one heat-activable surface, to a support in the form of extruded gasket for applications in the automobile, building and/or in the medical and domestic appliance sectors. The device and the method according to the invention are particularly suitable for the application of double-sided adhesive tape or flock tapes to an extruded gasket extending lengthwise preferably made of rubber or thermoplastic material, such as PVC.

### STATE OF THE ART

As it is known, there exist industrial processes in which it is necessary to apply an adhesive face of a tape to a mechanical support. In the case of double-sided adhesive tapes, for example, the mechanical support is destined to be attached to other objects or parts thereof.

This need is particularly felt in the motor vehicle industry and more precisely in the production of gaskets for motor vehicles. In particular, different types of tapes are applied to gaskets, the most frequently used of which are double-sided adhesive tapes and "flock" tapes, distinguished by a "flock" surface, i.e. on which a velvet effect has been obtained.

In the case of double-sided adhesive tapes it is necessary to heat the tape in order to activate a surface known as "heat-activable" which develops adhesive properties to allow the tape to attach to a surface of the gasket. In order for this adhesion to be effective and long-lasting, it is also necessary to heat the gasket, to eliminate residues of oils and greases which would drastically reduce the adhesive power of the double-sided adhesive tape.

To determine this increase in temperature on the double-sided adhesive tape and on the gasket, heating systems are conventionally used, such as jets of hot air or infrared radiation generated by specific lamps. These systems must be able to heat the double-sided adhesive tape without exceeding the activation temperature, otherwise the mechanical structure of the tape can be damaged. In fact, double-sided adhesive tapes are often made of plastic materials that melt at 150 - 250 °C, against an activation temperature of the tape of around 140 °C.

It is thus understood how delicate the heating process of the double-sided adhesive tape is, above all if the gasket to which the tape is to be applied must also be heated. This problem is even more serious if we consider that the double-sided adhesive tape must be applied with a certain force to the gasket and at a feed speed of 10-20 metres/minute or even higher.

Prior art proposes complex guide systems adapted to withstand high differences in temperature. For example, when heating both the double-sided adhesive tape and the gasket the guide pulleys of the tape and/or gasket tend to become hot through thermal conduction, and therefore the temperature of the guide pulleys can reach a temperature sufficient to activate the tape before it reaches the point of application to the gasket, with consequent imperfect results. Therefore, there is now well-established use in prior art of cooling circuits, by means of cooling liquid that flows through channels produced inside the guide pulleys in order to maintain them at a temperature below the limit temperature.

Moreover, the fact of also heating the support material (or gasket) means that this dilates and then returns to its original dimensions when it cools. The different thermal expansion coefficient between the double-sided adhesive tape and the support causes tensions upon cooling and the appearance of wrinkles on the protective layer, called liner, of the adhesive face of the double-sided adhesive tape not involved in this step of processing.

It is evident that for the thermoplastic material forming the gaskets these mechanical tensions are particularly critical, above all when a double-sided adhesive tape is applied. Moreover, in order to allow further handling of the machined product comprising the gasket to which the double-sided adhesive tape has been applied, it is necessary to wait until the product has cooled, with further technical solutions that involve further costs.

Therefore, although the prior art provides complex cooling systems of the guide pulleys of the double-sided adhesive tape and, if necessary, of the gasket, it is unable to ensure a constantly acceptable result, above all if considering that the physical-mechanical properties of the products can vary greatly in relation to suppliers and to different batches, and therefore these industrial processes require a period for improvement of the adjustments for operation of machines during which defective products are produced at least temporarily.

On the basis of these considerations the main aim of the present invention is to provide a device for the application of a tape to a gasket that solves the aforesaid problem of incorrect or premature heating of the tape and/or of excessive thermal expansion of the support material (gasket).

Within the scope of this aim, an object of the present invention is to provide a device that is reliable and easy to produce at competitive costs.

### SUMMARY

The present invention relates to a device for the application of a tape having at least one heat-activable surface to a gasket, in conformity with claim 1, wherein said device comprises a heat source adapted to activate said heat-activable surface of said tape and to heat the gasket and wherein said heat source is a laser.

The use of a laser source to heat the tape makes it possible to produce local heating only of the parts that require to be heated and at the moment immediately prior to application of the tape to the gasket, eliminating said problems of premature heating, through conduction of guide means and pulleys, of the tape or of the gasket to which the tape is to be applied.

As a result of the solution presented, it is possible to simplify the guide and driving means of the double-sided adhesive tape and of the gasket, as the relative liquid cooling systems can be eliminated with considerably saving of costs for the construction of systems and for relative maintenance.

The device according to the invention allows any tape provided with at least one heat-activable surface to be applied to a gasket. In a first possible operating condition, the tape applied can be of the double-sided adhesive type, i.e. provided with an adhesive surface opposite the heat-activable surface, by which the gasket can subsequently be connected to another body, for example to a part of a motor vehicle. This adhesive surface can be covered by a protective film (liner). In an alternative operating condition, the tape to be applied to the gasket can be of the "flock" type, i.e. comprising a surface, opposite the heat-activable surface, on which a velvet effect is produced. In a further operating condition, the tape to be applied to the gasket could comprise two heat-activable surfaces.

According to another aspect of the invention, the device can comprise a laser source adapted to illuminate, simultaneously heating the double-sided adhesive tape and the gasket, or at least a first laser source adapted to heat the double-sided adhesive tape, activating it, and at least a second laser source adapted to heat the gasket.

According to a further aspect, the present invention also relates, in conformity with claim 6, to a method for the application of a double-sided adhesive tape to a support comprising the process of activating the double-sided adhesive tape by means of a laser source.

The dependent claims describe preferred embodiments of the invention, forming an integral part of the present description.

### BRIEF DESCRIPTION OF THE FIGURES

Further features and advantages of the invention will be more apparent in the light of the detailed description of preferred, but not exclusive, embodiments of a device for the application of a double-sided adhesive tape to a gasket, shown by way of non-limiting example with the aid of the accompanying drawings, wherein:
Fig. 1 schematically represents a first embodiment of the device according to the present invention;
Fig. 2 schematically represents a second embodiment of the device according to the present invention;
Fig. 3 is a perspective view of a gasket applied to which is a tape having a heat-activable surface by means of the device and/or the method according to the present invention;
Fig. 4 is a schematic view of a system comprising an application device according to the present invention.

The same reference numbers and letters in the figures identify the same element or components.

### DETAILED DESCRIPTION OF THE INVENTION

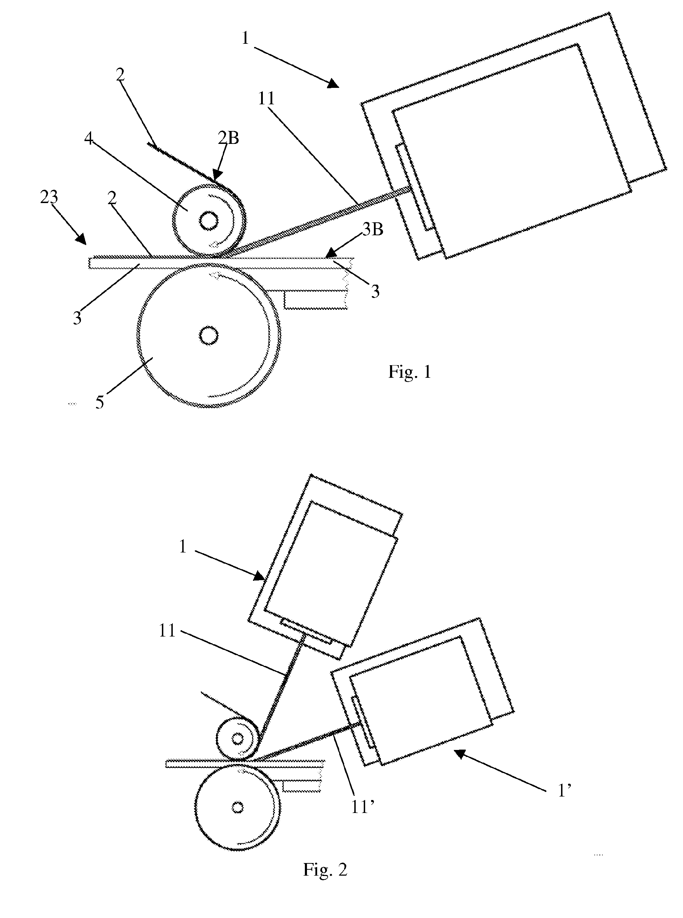

Fig. 1 illustrates a first embodiment, according to the present invention, of a device for the application of a tape 2, having at least one heat-activable surface 2B, to a gasket 3. The device comprises a first guide pulley 4 of the tape 2 opposed with a second guide pulley 5 of the gasket 3. Said opposed pulleys 4,5 are drawn close in order to compress, during their movement indicated by the arrows, the tape 2 onto the gasket 3. The device 1 comprises a heat source to activate the heat-activable surface 2B of the tape 2 and to heat a support surface 3B of the gasket 3 on which the surface 2B of the tape 2 adheres.

According to the invention, the heat source comprises at least one laser source 1 whose laser beam 11 is adapted to hit both the tape 2 (or the heat-activable surface 2B) and the gasket 3 (or the support surface 3B) shortly before the two are compressed against each other by said opposed pulleys 4,5. The product obtained 23 represents the gasket 3 with the tape 2 applied.

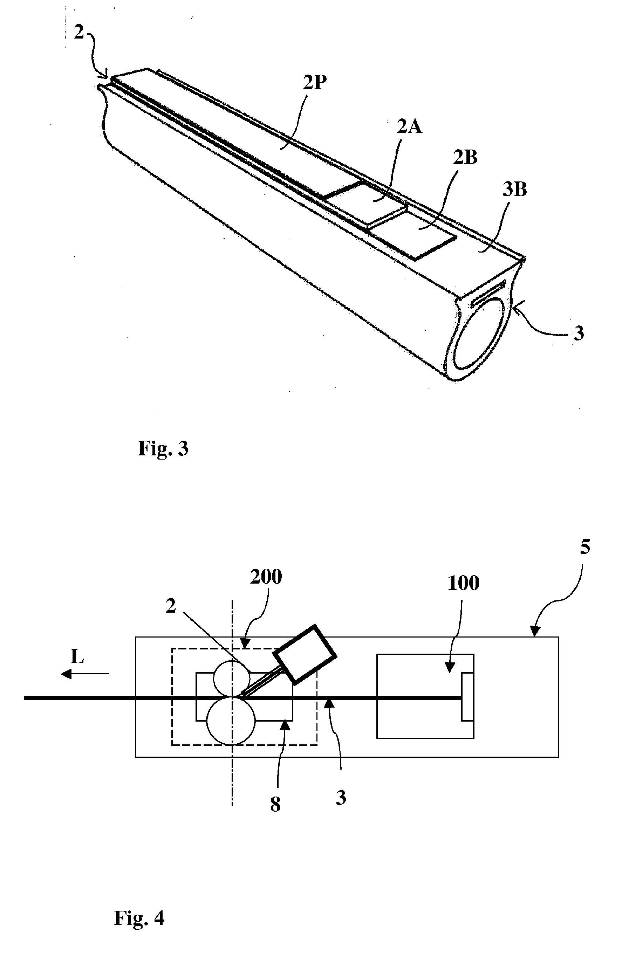

For this purpose figure 3 illustrates a gasket 3 having a support surface 3B to which a double-sided adhesive tape 2 has been applied by means of the device according to the invention. In particular, this double-sided adhesive tape comprises a heat-activable surface 2B opposite which there is a surface 2A made of adhesive material and a protective liner 2P applied to this adhesive surface 2A and destined to be removed to allow the gasket 3 to be connected to another body which may, for example, be a component of a motor vehicle.

With reference to the solution illustrated in Figs. 1 and 3, the laser beam 11 has a diameter sufficient to simultaneously hit the double-sided adhesive tape 2 and the gasket 3 directly in the area in which them come into contact. The laser beam 11 is able to heat to a much greater extent and, above all, regularly and with controlled temperature, the surfaces of the two materials, i.e. the heat-activable surface 2B of the tape 2 and the support surface 3B of the gasket 3. For this reason with the laser beam 11 is it advantageously possible to burn the oily deposits present on the surface of the support material without heating it internally and consequently without modifying the mechanical dimensions thereof. Moreover, as the laser beam 11 is pointed only at the desired area, it does not cause heating of the guide pulley 4 of the tape 2 and of the protective liner 2P of the tape, making it possible to eliminate the cooling systems normally used with considerable simplification of the entire device. More precisely, the thermal energy developed locally by the laser beam 11 does not damage the layer of adhesive material of the surface 2A of the tape 2 and therefore does not alter the properties thereof. Moreover, this thermal energy does not damage the structure of the protective liner 2P ensuring the presence and integrity thereof through time, to protect the adhesive surface 2A against the action of environmental impurities. According to a preferred embodiment, said at least one laser source 1 comprises movement means of the laser beam 11 adapted to move it according to predetermined trajectories (for example, circular or elliptical) around the area to be heated. In substance, the laser beam 11 is moved using the movement means, so that the position of its axis can vary continuously. This operating condition allows the heat-activable surface 2B of the tape 2 and the support surface 3B of the tape 3 to reach conditions of uniform temperature which advantageously ensure effective adhesion between the parts (i.e. between the surfaces 2B and 3B). A fixed position of the laser beam 11 could in fact cause strong adhesion between the surfaces 2B and 3B in proximity of the portions adjacent to the central axis of the laser beam 11 and less effective adhesion in proximity of the portions farther from this same axis (considering these distances according to a transverse direction, i.e. orthogonal to the direction of feed A of the product 23). The movement of the laser beam 11 according to at least partly transverse trajectories allows the entire heat-activable surface 2B of the tape 2 to adhere effectively to the support surface 3B of the gasket 3.

Fig. 2 relates to a second possible embodiment of the device according to the present invention. In particular, in this variant the laser sources are two, i.e. 1 and 1', of which a first source 1 is arranged in a manner such that its laser beam 11 hits the heat-activable surface 2B of the tape 2 and a second laser source 1' is arranged so that its laser beam 11' hits the support surface 3B of the gasket 3. Also in this case the two laser sources 1,1' can comprise movement means of the laser beam so as to vary, according to predetermined trajectories, the position of the beam or of the axis thereof according to what has already been indicated above.

For both the embodiments described above, it can be observed that the rotation speed of the two pulleys and the pressure exerted thereby on the contact point between tape and gasket are advantageously adjustable. Using a laser beam it is possible to constantly ensure the temperature of 140°C on the heat-activable surface of a double-sided adhesive tape 2, as the power of the laser can depend in real time on the feed speed of the material. A speed transducer, called encoder, is used to make the power directly proportional to the speed. This latter can also depend on optical temperature sensors aimed towards the contact point and adapted to measure the surface temperature of the double-sided adhesive tape and/or of the support. Moreover, the diameter of the laser beam can also be varied when the applications vary.

It is also observed that the product obtained 23 (gasket 3 with tape 2 applied) at the outlet of said opposed pulleys 4,5 returns almost immediately to ambient temperature, with considerable reduction of problems of curling and mechanical tension between the two joined materials and with the possibility of being handled without particular care. Moreover, a laser source forms an operating unit of limited dimensions which is easily housed in any position and which can operate at a distance of several millimetres from the point in which the laser beam is pointed. Advantageously, the solution proposed allows elimination of the preheating step of the tape (for example double-sided adhesive, flock or with two heat-activable surfaces) and/or of the gasket, ensuring the correct activation temperature of the tape immediately prior to its application to the gasket without raising the temperature of the elements of the system (such as opposed pulleys) in contact with the tape or with the support gasket.

The present invention also relates to an in-line system for the production of gaskets, for example destined for applications in the motor vehicle sector. The system 5 according to the invention comprises a first station 100 in which a gasket 3 extending lengthwise is obtained by extrusion, and a second station 200, in line with the first station 100, in which a tape 2 having at least one heat-activable surface 2B is applied to a support surface 3B of said gasket 3. The in-line system 5 is **characterized in that** the second station 200 comprises a device 8 for application of a tape 2 according to the present invention. The possibility of applying the tape 2 to the gasket 3 along the extrusion line L of the gasket allows production times and costs to be advantageously limited.

The present invention therefore also relates to a method for the application of a tape 2 having a heat-activable surface 2B to a support surface 3B of a gasket 3. The method according to the invention comprises the step of activating the heat-activable surface 2B and of heating the support surface 3B of the gasket 3 using at least one laser source 1.

The method preferably includes the step of compressing, for example by opposed pulleys, the tape 2 on the gasket 3 and of hitting, using at least one laser source, the heat-activable surface of the tape before it has been applied to the gasket 3 and the support surface 3B of the gasket 3 before the tape 2 is applied to this gasket.

Preferably, the method provides for moving the laser source according to predetermined trajectories to make the temperature of the heat-activable surface of the tape 2 and the support surface 3B of the tape 3 uniform, so as to increase adhesion between the surfaces according to aims indicated above.

In a first embodiment, the tape 2 is of the double-sided adhesive type, comprising an adhesive surface 2B opposite the heat-activable surface and preferably covered with a protective liner 2P. Alternatively, the tape 2 can be "flock", i.e. comprising a flock surface opposite the heat-activable surface. In a further variant of the method, the tape 2 can comprise a pair of heat-activable surfaces. The gasket 3 to which the tape is applied can be made of rubber or thermoplastic material, such as PVC.

According to a further variant, the method comprises the step of heating the heat-activable surface 2B of the tape 2 using a laser source 1 and the step of heating the support surface 3B of the gasket 3 using a further laser source 1' differing from the one used to activate the surface 2B of the tape 2.

The technical solutions adopted for the present invention allow the proposed aims and the objects to be fully achieved. In particular, the advantages deriving from application of the present invention are apparent:
- elimination of the operation to preheat the gasket;
- greater control over temperature in the point/moment of application of the tape having at least one heat-activable surface to the gasket;
- limiting heating only to the areas of application of the tape and of the gasket;
- elimination of the cooling systems of the guide pulleys originally destined to

prevent influencing the point/moment of activation of the glue present on the tape;
- increased execution speed of application of the tape, for example of the double-sided adhesive type, due to the increased incision and selection of the laser beam with respect to known systems;
- possibility of applying the tape to the gasket along the extrusion line of this gasket.

The elements and the features illustrated in the various preferred embodiments can be combined without however departing from the scope of protection of the present application.

## Claims

1. A device for the application of a tape (2) having at least one heat-activable surface (2B) to a gasket (3) comprising a heat source (1) adapted to activate said heat-activable surface of said tape (2) and to heat said gasket (3), wherein said source comprises at least one laser (1).

2. The device as claimed in claim 1, wherein said device comprises a laser source (1) arranged to activate said heat-activable surface (2B) of said double-sided adhesive tape (2) and a further laser source (1') arranged to heat said gasket (3).

3. The device as claimed in claim 1 or 2, wherein said device comprises a first guide pulley (4) of the tape (2) opposed with a second guide pulley (5) of the gasket (3), said pulleys (4,5) being drawn close in order to compress the tape (2) on the gasket (3) and a laser beam (11) being generated by said at least one laser (1) in order to hit at least said tape (2) shortly before it is applied to said gasket (3) by said opposed pulleys (4,5), said laser beam (11) also being able to hit said gasket before said tape is applied thereto by said opposed pulleys (4,5).

4. The device as claimed in any one of claims 1 to 3, wherein said device comprises movement means of the laser beam adapted to move the beam according to predetermined trajectories.

5. A system (5) for the production of a gasket 3, wherein said system (5) comprises a first station (100) in which said gasket (3) is obtained by extrusion, and a second station (200), in line with said first station (100), in which a tape (2) having at least one heat-activable surface (2B) is applied to a support surface (3B) of said gasket (3), said second station (200) comprising a device (8) according to any one of claims 1 to 4.

6. A method for the application of a tape (2) having at least one heat-activable surface (2B) to a support surface (3B) of a gasket (3), said method comprising the steps of activating said heat-activable surface (2B) of said tape (2) and of heating said gasket (3) by means of at least one laser source (1).

7. The method as claimed in claim 6, wherein said surface (2B) of said tape (2) is activated by a laser source (1) and wherein said support surface (3B) of said gasket is heated by a further laser source (1').

8. The method as claimed in claim 6 or 7, wherein said tape (2) is of the double-sided adhesive type comprising an adhesive surface (2A) opposite said heat-activable surface (2B) and covered by a removable liner (2P).

9. The method as claimed in claim 6 or 7, wherein said tape (2) is a flock tape comprising a flock surface opposite said heat-activable surface (2B).

10. The method as claimed in claim 6 or 7, wherein said tape (2) comprises a first and a second heat-activable surface, mutually opposite.
